# EUROPEAN PATENT APPLICATION

(11) **EP 4 653 611 A1**
(43) Date of publication of application: **26.11.2025**
(21) Application number: 25177863.5
(22) Date of filing: 21.05.2025
(51) Int. Cl.: D21C 9/00, D21H 17/14, D21H 17/21, D21H 17/24, D21H 17/63, D21H 17/00, D21H 21/16, D21H 21/24, D21H 21/56

(54) **A SUSTAINABLE PROCESS FOR FABRICATION OF HYDROPHOBIC LIGHTWEIGHT PRODUCTS FROM CELLULOSE-BASED PULPS**

(30) Priority: 23.05.2024 US 202463651004 P
(71) Applicant: OrganoGraph AB, 852 33 Sundsvall (SE)
(72) Inventor: CORDOVA, Armando, SE-113 46 Stockholm (SE); ALIMOHAMMADZADEH, Rana, SE-856 45 Sundsvall (SE)
(74) Representative: Swea IP Law AB

(57) **Abstract**

The present invention relates to a material suitable for manufacturing hydrophobic cellulose-based light-weight products, such as foams and foam papers, comprising any type of cellulose pulp from either soft wood or hardwood,
2 to 10 wt.% of hydrophobic suspension (OAF) to pulp,
0.5 to 5wt% of Chitosan solution in organic acids to pulp, 3 to 10 wt.% of surfactants to the pulp. The invention also relates to a process of making said material and a use thereof.

## Description

### Field of the invention

The invention relates to a material or process for manufacturing hydrophobic cellulose-based light-weight products such as foams and foam papers, comprising any type of cellulose pulp, such as TMP, CTMP, sulphite pulp, kraft pulp, and any type of bleached pulp from either soft wood or hardwood, 2 to 10 wt.% of hydrophobic suspension OAF to pulp, 0.5 to 5wt% of Chitosan solution in organic acids to pulp, 3 to 10 wt.% of surfactants to the pulp.

### Background of the invention

The present invention relates to the process of producing hydrophobic lightweight products such as foams, foam papers, and biobased polymer composites from lignocellulose and cellulose resources. The process has a capability for fabrication of products with high mechanical properties as well as hydrophobicity. Any type of pulp such as Thermo-mechanical (TMP), chemo thermomechanical (CTMP), kraft, sulphite pulp and the bleached one from any type of pulp from soft wood and hardwood can be used in this process. Organocatalytic aqueous formulation, biobased hydrophobic suspension, inorganic particles such as clay, hydrophilic and hydrophobic silica, sodium silicate and any type of electroconductive materials such as nonographite, can be used with this process to fabricate new products for a variety of applications. Moreover, adding Micro celluloses and nanocelluloses such as MCC, CNF and CNC will also improve the strength and the performance of this new biobased products. The process can also be applied to prepare hydrophobic pulp. The fabricated lightweight product can be used for packaging and water decontamination applications (e.g. oil/water separation, removal of metal pollution from water). Moreover, they can be used in electroconductivity, fire retardant and insolation applications and purposes.

### Summary of invention

A main objective of the present invention is to produce hydrophobic lightweight cellulose- based products in a single step using green chemistry, providing a feasible method for industry, especially for large scale production in an economically feasible manner.

This object is achieved and exemplified by the material suitable for manufacturing of hydrophobic foams as defined in claim 1.

In some aspects, a material suitable for manufacturing hydrophobic cellulose-based light-weight products, such as foams and foam papers, comprises or consists of any type of cellulose pulp from either soft wood or hardwood,
2 to 10 wt.% of hydrophobic suspension (OAF) to pulp,
0.5 to 5wt% of Chitosan solution in organic acids to pulp, 3 to 10 wt.% of surfactants to the pulp.

In some aspects, a material suitable for manufacturing hydrophobic cellulose-based light-weight products, such as foams and foam papers, comprises or consists of any type of cellulose pulp from soft wood or hardwood,
2 to 10 wt.% of hydrophobic suspension (OAF1) to pulp,
0.5 to 5wt% of Chitosan solution in organic acids selected from the group comprising or consisting of acetic acid, citric acid, oxalic acid, and lactic acid to the pulp.
3 to 10 wt.% of surfactants selected from the group comprising or consisting of sodiumdodecyl sulfate (SDS), and sodiumlaurylsulfoacetate (SLSA).

In some aspects, a material suitable for manufacturing hydrophobic cellulose-based light-weight products, such as foams and foam papers, comprises or consists of any type of cellulose pulp from soft wood or hardwood,
2 to 10 wt.% of hydrophobic suspension (OAF2) to pulp,
3to 10 wt.% of surfactants selected from the group comprising or consisting of sodiumdodecyl sulfate (SDS), and sodiumlaurylsulfoacetate (SLSA).

In some aspects, a material suitable for manufacturing hydrophobic cellulose foam with additional function, comprises or consists of
any type of cellulose pulp from soft wood or hardwood,
2 to 10 wt.% of hydrophobic suspension either OAF1 or OAF2 to pulp,
0.5 to 5wt% of Chitosan solution in organic acids selected from the group comprising or consisting of acetic acid, citric acid, oxalic acid, and lactic acid to the pulp,
3 to 10 wt.% of surfactants selected from the group comprising or consisting of sodiumdodecyl sulfate (SDS), and sodiumlaurylsulfoacetate (SLSA),
0.5 to 6 wt% of an inorganic component selected from the group comprising or consisting of silica dioxide gel, hydrophilic pyrogenic silica, hydrophobic pyrogenic silica, nonographite, montmorillonite, titanium dioxide and sodium silicate.

In some aspects, a material suitable for manufacturing hydrophobic cellulose foam with additional function, comprises or consists of
any type of cellulose pulp from soft wood or hardwood,
2 to 10 wt.% of hydrophobic suspension either OAF1 or OAF2 to pulp,
0.5 to 5wt% of Chitosan solution in organic acids selected from the group comprising or consisting of acetic acid, citric acid, oxalic acid, and lactic acid to the pulp,
3 to 10 wt.% of surfactants selected from the group comprising or consisting of sodiumdodecyl sulfate (SDS), and sodiumlaurylsulfoacetate (SLSA),
0.5 to 6wt.% of a lignin selected from sulphonated, kraft, and dissolved lignin.

In some aspects, a material suitable for manufacturing hydrophobic cellulose foam with additional function, comprises or consists of
any type of cellulose pulp from soft wood or hardwood.
2 to 10 wt.% of hydrophobic suspension either OAF1 or OAF2 to pulp,
0.5 to 5wt% of Chitosan solution in organic acids selected from the group comprising or consisting of acetic acid, citric acid, oxalic acid, and lactic acid to the pulp,
3 to 10 wt.% of surfactants selected from the group comprising or consisting of sodiumdodecyl sulfate (SDS), and sodiumlaurylsulfoacetate (SLSA),
0.5 to 6wt.% of a nanocellulose selected from the group of MCC, CNF, CNC.

In some aspects, the material as defined anywhere herein, the pulp is selected from the group comprising or consisting of TMP, CTMP, sulphit pulp, kraft pulp, and any type of bleached pulp.

In some aspects, organ silane C₁₀₋₃₀alkanetriC₁₋₅alkoxysilane is hexadecyltrimethoxysilane or octadecyltrimethoxysilane.

In some aspect, polysaccharide is low molecular weight (below 200 kDa), or medium molecular weight (between 200 and 1500 kDa) or high molecular weight chitosan (more than 1500 kDa).

In some aspect, polysaccharide is cationic starch.

In some aspects, organic acids selected from the group comprising or consisting of acetic acid, tartaric acid, citric acid, oxalic acid, and lactic acid.

Some aspects relate to a use of the materials as defined anywhere herein, for packaging purposes.

Some aspects relate to a use of the materials as defined anywhere herein, for oil/water separation, and removing of water contaminants.

Some aspects relate to a use of the materials as defined anywhere herein, for fire retardancy, insulation, and electroconductivity applications.

Some aspects relate to a use of the materials as defined anywhere herein, for metal ion removal.

Some aspects relate to a use of the materials as defined anywhere herein, for removal of a pharmaceutical contaminant.

Some aspects relate to a process for manufacturing OAF2 suspension for use in the material as defined anywhere herein comprising or consisting of the steps of mixing preparing organic acid (0.5-4wt.%) solution,
dissolving a polysaccharide (0.5-5wt.%) in organic acid,
heating the system until 65-85 °C for 20-30 minutes,
optionally centrifuging the solution,
adding 0.5 to 5wt.% C₁₀₋₃₀ alkanetriC₁₋₅alkoxysilane to the (d),
homogenizing the mixture by ultra torax.
Some aspects relate to the process comprising or consisting of mixing
preparing organic acid (0.5-4wt.%) solution from the group comprising or consisting of acetic acid, citric acid, oxalic acid, and lactic acid,
dissolving chitosan low molecular weight to high molecular weight in organic acid (a),
heating the system until 65 °C for 20-30 minutes,
centrifuge the solution,
adding (0.5-5wt.%) C₁₀₋₃₀ alkanetriC₁₋₅alkoxysilane to the (d),
homogenizing the mixture by ultra torax.
Some aspects relate to the process comprising or consisting of mixing
preparing organic acid (0.1-2wt.%) solution from the group comprising or consisting of acetic acid, citric acid, oxalic acid, and lactic acid
dissolving cationic starch in organic acid solution (a)
heating the system until 85 °C for 20-30 minutes
adding (0.5-5wt.%) C₁₀₋₃₀ alkanetriC₁₋₅alkoxysilane to the (c)
homogenizing the mixture by ultra torax.

In some further aspects, the invention relates to a material or process for manufacturing hydrophobic cellulose-based light-weight products such as foams and foam papers, comprising or consisting of
any type of cellulose pulp, such as TMP, CTMP, sulphite pulp, kraft pulp, and any type of bleached pulp from either soft wood or hardwood,
2 to 10 wt.% of hydrophobic suspension OAF to pulp,
0.5 to 5wt% of Chitosan solution in organic acids to pulp, 3 to 10 wt.% of surfactants to the pulp.

In some further aspects, the invention relates to a material or process for manufacturing hydrophobic cellulose-based light-weight products such as foams and foam papers, comprising or consisting of
any type of cellulose pulp, such as TMP, CTMP, sulphit pulp, kraft pulp, and any type of bleached pulp from soft wood or hardwood,
2 to 10 wt.% of hydrophobic suspension OAF1 to pulp,
0.5 to 5wt% of Chitosan solution in organic acids selected from the group comprising or consisting of acetic acid, citric acid, oxalic acid, and lactic acid to the pulp.
3 to 10 wt.% of surfactants selected from the group comprising or consisting of sodiumdodecyl sulfate (SDS), and sodiumlaurylsulfoacetate (SLSA).

In some further aspects, the invention relates to a material or process for manufacturing hydrophobic cellulose-based light-weight products such as foams and foam papers, comprising or consisting of
any type of cellulose pulp, such as TMP, CTMP, sulphit pulp, kraft pulp, and any type of bleached pulp from soft wood or hardwood,
2 to 10 wt.% of hydrophobic suspension OAF2 to pulp,
3 to 10 wt.% of surfactants selected from the group comprising or consisting of sodiumdodecyl sulfate (SDS), and sodiumlaurylsulfoacetate (SLSA).

In some further aspects, the invention relates to a process for manufacturing OAF2 suspension for use in the composition as defined anywhere herein comprising or consisting the steps of mixing
preparing organic acid (0.5-4wt.%) solution,
dissolving the polysaccharide (0.5-5wt.%) in organic acid,
heating the system until 65-85 °C for 20-30 minutes,
centrifuging the solution if needed,
adding 0.5 to 5wt.% C₁₀₋₃₀ alkanetriC₁₋₅alkoxysilane to the (d),
homogenizing the mixture by ultra torax.

In some further aspects, the process comprises or consists of the steps of mixing preparing organic acid (0.5-4wt.%) solution from the group comprising or consisting of acetic acid, citric acid, oxalic acid, and lactic acid,
dissolving chitosan low molecular weight to high molecular weight in organic acid (a),
heating the system until 65 °C for 20-30 minutes,
centrifuge the solution,
adding (0.5-5wt.%) C₁₀₋₃₀ alkanetriC₁₋₅alkoxysilane to the (d),
homogenizing the mixture by ultra torax.

In some further aspects, the process comprises or consists of the steps of mixing preparing organic acid (0.1-2wt.%) solution from the group comprising or consisting of acetic acid, citric acid, oxalic acid, and lactic acid
dissolving cationic starch in organic acid solution (a)
heating the system until 85 °C for 20-30 minutes
adding (0.5-5wt.%) C₁₀₋₃₀ alkanetriC₁₋₅alkoxysilane to the (c)
homogenizing the mixture by ultra torax.

In some further aspects, the invention relates to a material or process for manufacturing hydrophobic cellulose foam with additional function, comprising or consisting of any type of cellulose pulp, such as TMP, CTMP, sulphit pulp, kraft pulp, and any type of bleached pulp from soft wood or hardwood,
2 to 10 wt.% of hydrophobic suspension either OAF1 or OAF2 to pulp,
0.5 to 5wt% of Chitosan solution in organic acids selected from the group comprising or consisting of acetic acid, citric acid, oxalic acid, and lactic acid to the pulp,
3 to 10 wt.% of surfactants selected from the group comprising or consisting of sodiumdodecyl sulfate (SDS), and sodiumlaurylsulfoacetate (SLSA),
0.5 to 6 wt% of an inorganic component selected from the group comprising or consisting of silica dioxide gel, hydrophilic pyrogenic silica, hydrophobic pyrogenic silica, nonographite, montmorillonite, titanium dioxide and sodium silicate.

In some further aspects, the invention relates to a material or process for manufacturing hydrophobic cellulose foam with additional function, comprising or consisting of
any type of cellulose pulp, such as TMP, CTMP, sulphit pulp, kraft pulp, and any type of bleached pulp from soft wood or hardwood,
2 to 10 wt.% of hydrophobic suspension either OAF1 or OAF2 to pulp,
0.5 to 5wt% of Chitosan solution in organic acids selected from the group comprising or consisting of acetic acid, citric acid, oxalic acid, and lactic acid to the pulp,
3 to 10 wt.% of surfactants selected from the group comprising or consisting of sodiumdodecyl sulfate (SDS), and sodiumlaurylsulfoacetate (SLSA),
0.5 to 6wt.% of a lignin selected from sulphonated, kraft, and dissolved lignin.

In some further aspects, the invention relates to a material or process for manufacturing hydrophobic cellulose foam with additional function, comprising or consisting of
any type of cellulose pulp, such as TMP, CTMP, sulphit pulp, kraft pulp, and any type of bleached pulp from soft wood or hardwood.
2 to 10 wt.% of hydrophobic suspension either OAF1 or OAF2 to pulp.
0.5 to 5wt% of Chitosan solution in organic acids selected from the group comprising or consisting of acetic acid, citric acid, oxalic acid, and lactic acid to the pulp,
3 to 10 wt.% of surfactants selected from the group comprising or consisting of sodiumdodecyl sulfate (SDS), and sodiumlaurylsulfoacetate (SLSA),
0.5 to 6wt.% of a nanocellulose selected from the group of MCC, CNF, CNC.

In some aspects, the hydrophobic lightweight materials made according to any one of the processes defined above are used for packaging purposes.

In some aspects, the hydrophobic lightweight materials made according to any one of the processes defined above are used for oil/water separation, and removing of water contaminants.

In some aspects, the hydrophobic lightweight materials made according to any one of the processes defined above are used for fire retardancy, insulation, and electroconductivity applications.

In some aspects, the hydrophobic lightweight materials made according to any one of the processes defined above are used for metal ion removal.

In some aspects, the hydrophobic lightweight materials made according to any one of the processes defined above are used for removal of a pharmaceutical contaminant.

### Brief description of the drawings

The invention will now be explained more closely by the description of different embodiments of the invention and with reference to the appended figure.
Fig. 1 shows an example of hydrophobic CTMP foam with OAF2 (EXP. 12). (a) photograph of foam, (b) the photograph of foams cross-section (c) the photo of hydrophobic foam with waterdrops.
Fig. 2 shows a graph of compression test of hydrophobic foam with OAF1, (EXP 11). (a) the first compression test, (b) the second cycle after one hour recovery time, (c) the third cycle after 1 hour recovery time.

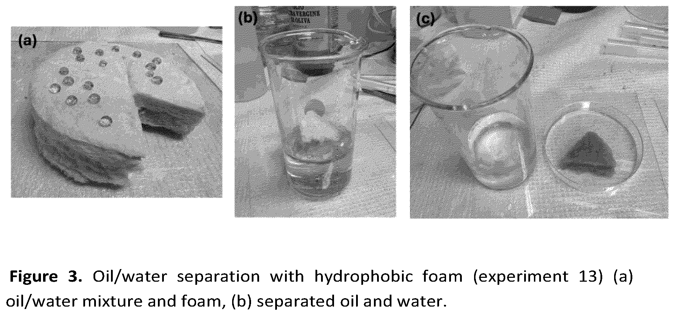

Fig. 3 shows an oil/water separation with hydrophobic foam (experiment 13) (a) oil/water mixture and foam, (b) separated oil and water.

### Detailed description of the invention

### Definitions

The definitions set forth in this application are intended to clarify terms used throughout this application. The term "herein" means the entire application.

As used herein, the term "wt%", "wt.%" and "% w/w" means percentages of the total weight of the composition.

As used herein, the term "optional" or "optionally" or "if needed" means that the subsequently described event or circumstance may but need not occur, and that the description includes instances where the event or circumstance occurs and instances where it does not.

As used herein, the terms "Cₙ", used alone or as a suffix or prefix, is intended to include hydrocarbon-containing groups; n is an integer from 1 to 40.

The expression "from xx to yy" and "of xx to yy" means an interval from or of, and including xx, to and including yy. For example, of 2 to 4 includes numbers 2.0 and 4.0 and any number in between 2.0 and 4.0.

As used herein the term "C₁₀₋₃₀alkane" used alone or as a suffix or prefix, is intended to include both saturated or unsaturated, branched or straight chain, monovalent hydrocarbon radical derived by the removal of one hydrogen atom from a single carbon atom or atom or a parent alkane, alkene or alkyne. Examples include, but are not limited to, decanyl, undecane, dodecane, tridecane, tetradecane, pentadecane, hexadecane, heptadecane, octadecane, nonadecane, icosane, henicosane, docosane, tricosane, tetracosane, pentacosane, hexacosane, heptacosane, octacosane, nonacosane, triacontane, and any stereoisomer of any of these alkanes. The term "alkyl" is specifically intended to include groups having any degree or level of saturation, including groups having exclusively single carbon-carbon bonds, groups having one or more double carbon-carbon bonds, groups having one or more triple carbon-carbon bonds, and groups having combinations of single, double, and triple carbon-carbon bonds.

As used herein, the term "alkoxy" or C₁₋₃-alkoxy", used alone or as a suffix and prefix, refers to an alkyl radical which is attached to the remainder of the molecule through an oxygen atom. Examples of C₁₋₅-alkoxy include methoxy, ethoxy, propoxy, butoxy and pentoxy. Examples of C₁₋₃-alkoxy include methoxy, ethoxy, n-propoxy and isopropoxy.

As used herein, "polymer" refers to a chemical species or a radical made up of repeatedly linked moieties. The number of repeatedly linked moieties is 10 or higher. The linked moieties may be identical or may be a variation of moiety structures.

As used herein, the term "low molecular weight chitosan" refers to a chitosan having a Molecular Weight below 200 kDa.

As used herein, the term "medium molecular weight chitosan" refers to a chitosan having a Molecular Weight between 200 and 1500 kDa.

As used herein, the term "medium molecular weight chitosan" refers to a chitosan having a Molecular Weight over 1500 kDa.

As used herein, the term "light-weight products" refers to a product having a weight of less than 1 kg.

As used herein, the term "wt% of an ingredient to pulp" means the weight percentage of the ingredient in relation to the total weight of the pulp. In other words, weight percentages are percentages of the total weight of the pulp.

As used herein, the term "pulp" means a soft, wet, shapeless mass of material originating from softwood or hardwood.

According to an aspect of the invention, the manufacturing process comprises or consists of the steps of mixing:
any type of cellulose pulp, such as TMP, CTMP, sulphite pulp, kraft pulp, and any type of bleached pulp from either soft wood or hardwood,
2 to 4 wt.% or 4 to 6 wt.% or 6 to 8 wt.% or 8 to 10 wt.% of hydrophobic suspension OAF1 to pulp,
0.5 to 3 wt.% or 3 to 5wt% of Chitosan solution in organic acids to pulp, and
3 to 5 wt.% or 5 to 8 wt.% or 8 to 10 wt.% of surfactants to the pulp.

Any of these combinations of weight percentages may be used in the composition forming the material made by the process of the invention.

The manufacturing process comprises or consists of the steps of mixing:
any type of cellulose pulp, such as TMP, CTMP, sulphit pulp, kraft pulp, and any type of bleached pulp,
2 to 4 wt.% or 4 to 6 wt.% or 6 to 8 wt.% or 8 to 10 wt.% of hydrophobic suspension OAF1 to pulp,
0.5 to 3 wt.% or 3 to 5wt% of Chitosan solution in organic acids selected from the group comprising or consisting of acetic acid, tartaric acid, citric acid, oxalic acid, and lactic acid to the pulp, and
2 to 10 wt.% of surfactants to the pulp.

Any of these combinations of weight percentages may be used in the composition forming the material made by the process of the invention. The manufacturing process may comprise or consist of the steps of mixing:
any type of cellulose pulp, such as TMP, CTMP, sulphit pulp, kraft pulp, and any type of bleached pulp, 2 to 4 wt.% or 4 to 6 wt.% or 6 to 8 wt.% or 8 to 10 wt.% of hydrophobic suspension OAF1 to pulp,
0.5 to 3 wt.% or 3 to 5wt% of Chitosan solution in organic acids to pulp, and
3 to 5 wt.% or 5 to 8 wt.% or 8 to 10 wt.% of surfactants selected from the group comprising or consisting of sodium dodecyl sulfate (SDS), and Sodium Lauryl Sulfoacetate (SLSA).

Any of these combinations of weight percentages may be used in the composition forming the material made by the process of the invention.The manufacturing process may comprise or consist of the steps of mixing:
any type of cellulose pulp, such as TMP, CTMP, sulphit pulp, kraft pulp, and any type of bleached pulp from softwood,
2 to 4 wt.% or 4to 6wt.% or 6to 8wt.% or 8to 10 wt.% wt.% of hydrophobic suspension OAF1 to pulp,
0.5 to 3 wt.% or 3 to 5wt% of Chitosan solution in organic acids selected from the group comprising or consisting of acetic acid, tartaric acid, citric acid, oxalic acid, and lactic acid to the pulp, and
3 to 5 wt.% or 5 to 8 wt.% or 8 to 10 wt.% of surfactants selected from the group comprising or consisting of sodium dodecyl sulfate (SDS), and Sodium Lauryl Sulfoacetate (SLSA).

Any of these combinations of weight percentages may be used in the composition forming the material made by the process of the invention.

The manufacturing process may comprise or consist of the steps of mixing:
any type of cellulose pulp, such as TMP, CTMP, sulphit pulp, kraft pulp, and any type of bleached pulp from hardwood,
2 to 4 wt.% or 4 to 6 wt.% or 6 to 8 wt.% or 8 to 10 wt.% of hydrophobic suspension OAF to pulp,
0.5 to 3 wt.% or 3 to 5wt% of Chitosan solution in organic acids selected from the group comprising or consisting of acetic acid, tartaric acid, citric acid, oxalic acid, and lactic acid to the pulp, and
3 to 5 wt.% or 5 to 8 wt.% or 8 to 10 wt.% of surfactants selected from the group comprising or consisting of sodium dodecyl sulfate (SDS), and Sodium Lauryl Sulfoacetate (SLSA).

Any of these combinations of weight percentages may be used in the composition forming the material made by the process of the invention.

The invention also relates to a process for the manufacturing of OAF2 as defined here. The composition of OAF2 for preparing hydrophobic suspension comprises an environmentally friendly ingredients and process. Polysaccharides are used for the dispersion of organosilanes in the water. The composition is chemically, thermally, and mechanically stable.

All ingredients can be readily provided in large quantitates, which allows for scalability in a cost-effective manner.

The invention also relates to a process for the manufacturing of the composition of OAF2 as defined here, comprising or consisting of the steps of mixing
a) Preparing organic acid (0.5 to 3 wt.% or 3 to 5 wt.%) solution,
b) Dissolving the polysaccharide (0.5 to 3 wt.% or 3 to 5wt.%) **in** organic acid solution,
c) heating the system until 65- 85°C for 20-30 minutes,
d) centrifuging the solution if needed,
e) adding (0.5-3 wt.%, or 3 to 6 wt.% or 6-8 wt.%) C₁₀₋₃₀ alkanetriC₁₋₅alkoxysilane to the d, and
f) homogenizing the mixture.

Any of these combinations of weight percentages may be used in the composition forming the material made by the process of the invention.

The invention further relates to the process of preparing hydrophobic foams with OAF2. The manufacturing process may comprise or consist of:
any type of cellulose pulp, such as TMP, CTMP, sulphit pulp, kraft pulp, and any type of bleached pulp from either softwood or hard wood,
2 to 4 wt.% or 4 to 6wt.% or 6to 8 wt.% or 8 to 10 wt.% wt.% of hydrophobic suspension OAF2 to pulp, and
3 to 5 wt.% or 5 to 8 wt.% or 8 to 10 wt.% of surfactants selected from the group comprising or consisting of sodium dodecyl sulfate (SDS), and Sodium Lauryl Sulfoacetate (SLSA).

Any of these combinations of weight percentages may be used in the composition forming the material made by the process of the invention.

The invention further relates to the process of preparing hydrophobic foams with additional function by adding inorganic materials. It provides improved performance of fabricated foam for packaging, insulation, water decontamination, fireretardant purposes.

A process for manufacturing hydrophobic cellulose foam with additional function as defined here, may comprise or consist of the steps of mixing
any type of cellulose pulp, such as TMP, CTMP, sulphit pulp, kraft pulp, and any type of bleached pulp from either soft wood or hardwood,
2 to 4 wt.% or 4 to 6 wt.% or 6 to 8 wt.% or 8 to 10 wt.% of hydrophobic suspension OAF1 to pulp,
0.5 to 3 wt.% or 3 to 5wt% of Chitosan solution in organic acids selected from the group comprising or consisting of acetic acid, citric acid, oxalic acid, and lactic acid to the pulp,
3 to 5 wt.% or 5 to 8 wt.% or 8 to 10 wt.% of surfactants selected from the group comprising or consisting of sodiumdodecyl sulfate (SDS), and sodiumlaurylsulfoacetate (SLSA), and
0.5 to 3 wt% and 4 to 6wt.% of an inorganic component selected from the group comprising or consisting of silica dioxide gel, hydrophilic pyrogenic silica, hydrophobic pyrogenic silica, nonographite, montmorillonite, titanium dioxide, and sodium silicate.

In some aspects, a process for manufacturing hydrophobic cellulose foam with additional function as defined here, may comprise or consist of the steps of mixing any type of lignocellulosic pulp, such as TMP, CTMP, sulphit pulp, kraft pulp, and any type of bleached pulp from either soft wood or hardwood,
2 to 4 wt.% or 4 to 6 wt.% or 6 to 8 wt.% or 8 to 10 wt.% of hydrophobic suspension OAF1 to pulp,
0.5 to 3 wt.% or 3 to 5wt% of Chitosan solution in organic acids selected from the group comprising or consisting of acetic acid, citric acid, oxalic acid, and lactic acid to the pulp,
3 to 5 wt.% or 5 to 8 wt.% or 8 to 10 wt.% of surfactants selected from the group comprising or consisting of sodiumdodecyl sulfate (SDS), and sodiumlaurylsulfoacetate (SLSA), and
0.5 to 3wt.% and 4 to 6wt.% of a lignin selected from sulphonated, kraft, and dissolved lignin.

In some aspects, a process for manufacturing hydrophobic cellulose foam with additional function as defined here, may comprise or consist of the steps of mixing any type of lignocellulosic pulp, such as TMP, CTMP, sulphit pulp, kraft pulp, and any type of bleached pulp from either soft wood or hardwood,
2 to 4 wt.% or 4 to 6 wt.% or 6 to 8 wt.% or 8 to 10 wt.% of hydrophobic suspension OAF1 to pulp, and
0.5 to 3 wt.% or 3 to 5wt% of Chitosan solution in organic acids selected from the group comprising or consisting of acetic acid, citric acid, oxalic acid, and lactic acid to the pulp,
3 to 5 wt.% or 5 to 8 wt.% or 8 to 10 wt.% of surfactants selected from the group comprising or consisting of sodiumdodecyl sulfate (SDS), and sodiumlaurylsulfoacetate (SLSA), and
0.5 to 3wt.% and 4 to 6wt.% of a nanocellulose selected from the group of MCC, CNF, CNC.

In some aspects, a process for manufacturing hydrophobic cellulose foam with additional function as defined here, may comprise or consist of the steps of mixing:
any type of cellulose pulp, such as TMP, CTMP, sulphit pulp, kraft pulp, and any type of bleached pulp from soft wood or hardwood,
2 to 4 wt.% or 4 to 6 wt.% or 6 to 8 wt.% or 8 to 10 wt.% of hydrophobic suspension OAF2 to pulp,
3 to 5 wt.% or 5 to 8 wt.% or 8 to 10 wt.% of surfactants selected from the group comprising or consisting of sodiumdodecyl sulfate (SDS), and sodiumlaurylsulfoacetate (SLSA), and
0.5 to 3 wt% and 4 to 6wt.% of an inorganic component selected from the group comprising or consisting of dioxide gel, hydrophilic pyrogenic silica, hydrophobic pyrogenic silica, nonographite, montmorillonite, titanium dioxide and sodium silicate.

In some aspects, a process for manufacturing hydrophobic cellulose foam with additional function as defined here, may comprise or consist of the steps of mixing any type of cellulose pulp, such as TMP, CTMP, sulphite pulp, kraft pulp, and any type of bleached pulp from soft wood or hardwood,
2 to 4 wt.% or 4 to 6 wt.% or 6 to 8 wt.% or 8 to 10 wt.% of hydrophobic suspension OAF2 to pulp,
3 to 5 wt.% or 5 to 8 wt.% or 8 to 10 wt.% of surfactants selected from the group comprising or consisting of sodiumdodecyl sulfate (SDS), and sodiumlaurylsulfoacetate (SLSA), and
0.5 to 3wt.% and 4 to 6wt.% of an lignin selected from sulphonated, kraft, and dissolved lignin.

In some aspects, a process for manufacturing hydrophobic cellulose foam with additional function as defined here, may comprise or consist of the steps of mixing
any type of lignocellulosic pulp, such as TMP, CTMP, sulphit pulp, kraft pulp, and any type of bleached pulp from soft wood or hardwood,
2 to 4 wt.% or 4 to 6 wt.% or 6 to 8 wt.% or 8 to 10 wt.% of hydrophobic suspension OAF2 to pulp,
3 to 5 wt.% or 5 to 8 wt.% or 8 to 10 wt.% of surfactants selected from the group comprising or consisting of sodiumdodecyl sulfate (SDS), and sodiumlaurylsulfoacetate (SLSA), and
0.5 to 3wt.% and 4 to 6wt.% of a nanocellulose selected from the group of MCC, CNF, CNC.

The invention also relates to fabrication of hydrophobic cellulose foam paper, according to an aspect of the invention, the manufacturing process may comprise or consist of
any type of cellulose pulp, such as TMP, CTMP, sulphit pulp, kraft pulp, and any type of bleached pulp from either soft wood or hardwood,
2 to 4 wt.% or 4 to 6 wt.% or 6 to 8 wt.% or 8 to 10 wt.% of hydrophobic suspension OAF1 to pulp,
0.5 to 3 wt.% or 3 to 5wt% of Chitosan solution in organic acids to pulp, and
3 to 5 wt.% or 5 to 8 wt.% or 8 to 10 wt.% of surfactants to the pulp.

In some aspect, the manufacturing process may comprise or consist of any type of cellulose pulp, such as TMP, CTMP, sulphit pulp, kraft pulp, and any type of bleached pulp, 2 to 4 wt.% or 4 to 6 wt.% or 6 to 8 wt.% or 8 to 10 wt.% of hydrophobic suspension OAF1 to pulp,
0.5 to 3 wt.% or 3 to 5wt% of Chitosan solution in organic acids selected from the group comprising or consisting of acetic acid, tartaric acid, citric acid, oxalic acid, and lactic acid to the pulp, and
3 to 10 wt.% of surfactants to the pulp.

In some aspect, the manufacturing process may comprise or consist of
any type of cellulose pulp, such as TMP, CTMP, sulphit pulp, kraft pulp, and any type of bleached pulp, 2 to 4 wt.% or 4 to 6 wt.% or 6 to 8 wt.% or 8 to 10 wt.% of hydrophobic suspension OAF1 to pulp,
0.5 to 3 wt.% or 3 to 5wt% of Chitosan solution in organic acids to pulp, and
3 to 5 wt.% or 5 to 8 wt.% or 8 to 10 wt.% of surfactants selected from the group comprising or consisting of sodium dodecyl sulfate (SDS), and Sodium Lauryl Sulfoacetate (SLSA).

The invention further relates to the process of preparing hydrophobic cellulose foam paper with OAF2, the manufacturing process may comprise or consist of
any type of cellulose pulp, such as TMP, CTMP, sulphit pulp, kraft pulp, and any type of bleached pulp from either softwood or hard wood,
2 to 4 wt.% or 4to 6wt.% or 6to 8 wt.% or 8 to 10 wt.% wt.% of hydrophobic suspension OAF2 to pulp, and
3 to 5 wt.% or 5 to 8 wt.% or 8 to 10 wt.% of surfactants selected from the group comprising or consisting of sodium dodecyl sulfate (SDS), and Sodium Lauryl Sulfoacetate (SLSA).

### Experimental

### Preparation of organic aqueous suspensions (OAFs)

### OAF preparation

The compound was synthesized according to our previously published patent (WO2022136398): Sodium dodecyl sulfate (1.15 g, 4 mmol) was dissolved in distilled water (100 mL) in a 250 mL round-bottom flask by stirring gently at room temperature for 30 minutes. Citric acid (200 mg, 0.52 mmol) was then added to the solution and stirred for an additional 5 minutes. The temperature was adjusted to 40 °C, after which hexadecyl trimethoxy silane (85%, 8 mL, 17.5 mmol) was added dropwise. The reaction mixture was stirred for 5 minutes and subsequently left under static conditions at 40 °C for 46 hours. Finally, the resulting mixture was homogenized using an ULTRA-TURRAX mixer (IKA T 25 digital) at 6000 rpm for 5 minutes.

OAF2. Into the chitosan solution, HDTMS was added slowly and homogenized by ultra torax for 30 minutes. It resulted the homogenic suspension. After few days again it was homogenized and sonicated and used.

### The process of preparing hydrophobic foam with OAF1

Disintegrated BCTMP softwood pulp, and surfactant (3-10 wt.% to dry mass of pulp), and chitosan solution (1- 5 wt.% of dry mass pulp) was mixed in the blender for 20 s, then OAF3 suspension (2-10 wt.% based on dry pulp) was added and mixed for extra 20s. The mixture was placed in a cylindrical mold for filtration, when the water draining stopped, we placed the wet foam in the oven 105 °C for 1.5 hour.

### The process of preparing hydrophobic foam with OAF2

4 g of disintegrated BCTMP sodtwood pulp, and surfactant (3-10 wt.% to dry mass of pulp), and OAF2 suspension (2-10 wt.% based on dry pulp) was added and mixed for 40s. The mixture was placed in a cylindrical mold for filtration, when the water draining stopped, we placed the wet foam in the oven 105 °C for 1.5 hour.

### The process of preparing hydrophobic foam paper with OAF2

4 g of disintegrated BCTMP softwood pulp, and surfactant (3-10 wt.% to dry mass of pulp), and OAF2 suspension (2-10 wt.% based on dry pulp) was added and mixed for 40s. The mixture was placed in a cylindrical mold to connect to a vacuum filtration.

When the water draining stopped, we placed the wet foam paper in the oven 105 °C for 1.5 hour.

### The process of preparing hydrophobic foam paper with OAF1

Disintegrated BCTMP softwood pulp, and surfactant (3-10 wt.% to dry mass of pulp), and chitosan solution (1- 5 wt.% of dry mass pulp) was mixed in the blender for 20 s, then OAF3 suspension (2-10 wt.% based on dry pulp) was added and mixed for extra 20s. The mixture was placed in a cylindrical mold to connect to a vacuum filtration. When the water draining stopped, we placed the wet foam paper in the oven 105 °C for 1.5 hour.

### Oil water separation and recyclability Study with hydrophobic foam.

Any type of oil such as Lubricant, olive oil, and silicon oil were used to analyze the hydrophobic foam for decontamination of water. 0.5 g of foam was soaked in 100 g of water/oil mixture (8wt.% oil) for 30 s. The oil was adsorbed by the hydrophobic foam, then the foam was soaked in butanol (50 ml) and after desorption of oil in butanol, the foam dried in the oven and again used for separation of another oil /water (8wt.%) mixture and washed in the previous butanol and oil mixture. Until 4 cycles the foam could adsorb almost all oil from water, after that it was saturated.

### Examples

1. 2 g of disintegrated BCTMP pulp, and SDS (7.5 wt.%) was added and mixed for 20s. The mixture was placed in a cylindrical mold for filtration. When the water draining stopped, we placed the wet foam in the oven 105 °C for 1 hour.
2. 2 g of disintegrated BCTMP pulp, and SDS (5 wt.%) was added and mixed for 20s. The mixture was placed in a cylindrical mold for filtration. When the water draining stopped, we placed the wet foam in the oven 105 °C for 1 hour.
3. 2 g of disintegrated BCTMP pulp, SDS (7.5 wt.%), and sodium silicate (1wt.%) was added and mixed for 20s. The mixture was placed in a cylindrical mold for filtration. When the water draining stopped, we placed the wet foam in the oven 105 °C for 1 hour.
4. 2 g of disintegrated BCTMP pulp, SDS (7.5 wt.%), and Chitosan dissolved in Acetic acid (1wt.%) was added and mixed for 20s. The mixture was placed in a cylindrical mold for filtration. When the water draining stopped, we placed the wet foam in the oven 105 °C for 1 hour.
5. 2 g of disintegrated BCTMP pulp, SDS (7.5 wt.%), and Chitosan dissolved in Acetic acid (1wt.%) plus MTM suspension (0.3 wt.%) was added and mixed for 20s. The mixture was placed in a cylindrical mold for filtration. When the water draining stopped, we placed the wet foam in the oven 105 °C for 1 hour.
6. 2 g of disintegrated BCTMP pulp, and SLSA (7.5 wt.%), were mixed for 20s. The mixture was placed in a cylindrical mold for filtration. When the water draining stopped, we placed the wet foam in the oven 105 °C for 1 hour.
7. 2 g of disintegrated BCTMP pulp, SLSA (7.5 wt.%), and kraft lignin (1wt.%) were mixed for 20s. The mixture was placed in a cylindrical mold for filtration. When the water draining stopped, we placed the wet foam in the oven 105 °C for 1 hour.
8. into 20 g of chitosan MMw (1wt.% in acetic acid 1%), 1 g of HDTMS was added slowly and homogenized by ultra torax at 10000 rpm for 30 minutes. It resulted the homogenic emulsion. After few days again it was homogenized and sonicated and used.
9. into 20 g of chitosan MMw (1wt.% in Citric acid 2%), 1 g of HDTMS was added slowly and homogenized by ultra torax at 10000 rpm for 30 minutes. It resulted the homogenic emulsion. After few days again it was homogenized and sonicated and used.
10. 4 gof disintegrated BCTMP pulp, SISA (7.5 wt.%) and OAF2 (5wt.%) was added in to the mixture and mixed for 40s. The mixture was placed in a cylindrical mold for filtration. When the water draining stopped, we placed the wet foam in the oven 105 °C for 1.5 hour.
11. 4 g of disintegrated BCTMP pulp, SISA (7.5 wt.%), and Chitosan dissolved in Acetic acid (1wt.%) was added and mixed for 20s. Then, OAF1 (5wt.%) was added in to the mixture and mixed for extra 20s. The mixture was placed in a cylindrical mold for filtration. When the water draining stopped, we placed the wet foam in the oven 105 °C for 1.5 hour.
12. 4 g of disintegrated CTMP pulp, SISA (7.5 wt.%) and OAF2 (5wt.%) was added in to the mixture and mixed for 40s. The mixture was placed in a cylindrical mold for filtration. When the water draining stopped, we placed the wet foam in the oven 105 °C for 1.5 hour.
13. 4 g of disintegrated CTMP pulp, SISA (7.5 wt.%), and Chitosan dissolved in Acetic acid (1wt.%) was added and mixed for 20s. Then, OAF1 (5wt.%) was added in to the mixture and mixed for extra 20s. The mixture was placed in a cylindrical mold for filtration. When the water draining stopped, we placed the wet foam in the oven 105 °C for 1.5 hour.
14. 4 g of disintegrated sulphite pulp, SISA (7.5 wt.%) and OAF2 (5wt.%) was added in to the mixture and mixed for 40s. The mixture was placed in a cylindrical mold for filtration. When the water draining stopped, we placed the wet foam in the oven 105 °C for 1.5 hour.
15. 4 g of disintegrated sulphite pulp, SISA (7.5 wt.%), and Chitosan dissolved in Acetic acid (1wt.%) was added and mixed for 20s. Then, OAF1 (5wt.%) was added in to the mixture and mixed for extra 20s. The mixture was placed in a cylindrical mold for filtration. When the water draining stopped, we placed the wet foam in the oven 105 °C for 1.5 hour.
16. 4 g of disintegrated kraft pulp, SISA (7.5 wt.%) and OAF2 (5wt.%) was added in to the mixture and mixed for 40s. The mixture was placed in a cylindrical mold for filtration. When the water draining stopped, we placed the wet foam in the oven 105 C for 1.5 hours.
17. 4 g of disintegrated CTMP pulp, SISA (7.5 wt.%) and OAF2 (5wt.%) was added in to the mixture and mixed for 40s. The mixture was placed in a cylindrical mold to connect to a vacuum filtration. When the water draining stopped, we placed the wet foam in the oven 105 °C for 1.5 hours.
18. OAF1 was prepared according to our previous patent. In a 250 ml round-bottom flask, sodium dodecyl sulphate (1.15 g, 4 mmol) was dissolved in milli-Q water (100 ml) by stirring slowly for 30 minutes at room temperature. Then, citric acid (200 mg, 1 mmol) was added to the mixture and followed by stirring for 5 minutes, the temperature was fixed at 40 C° and hexadecyl trimethoxy silane (8 ml, 17.5 mmol) was added dropwise and stirred for 5 minutes. Afterward, the reaction was continued at 40 °C in static condition for 2 hours. Then, the mixture was kept in room temperature for additional 46 hours. The prepared mixture was homogenized using an ULTRA TURRAX mixer (IKA T25 digital) at 6000 rpm for 5-10 minutes.

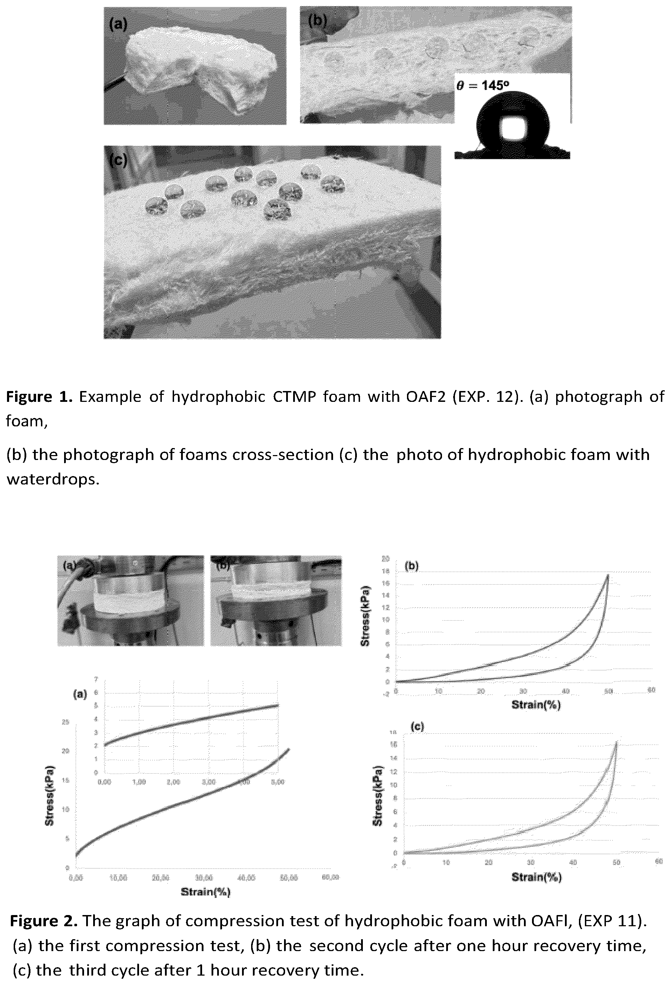

The prepared foams are hydrophobic as shown in Figure 1 and for the mechanical strength E-modulus values (Table 1) have been measured from the compression test graphs as shown in Figure 2.

**Table 1. The E-modulus values extracted from compression test.**

| **Experiment** | **E-Modulus(kPa)** | **Density(g/cm³)** |
|---|---|---|
| 1 | 1.52 | 0.007 |
| 2 | 7.3 | 0.016 |
| 3 | 1.76 | 0.008 |
| 4 | 5.7 | 0.009 |
| 5 | 2.57 | 0.007 |
| 6 | 2.72 | 0.008 |
| 7 | 3.17 | 0.008 |
| 10 | 15 | 0.015 |
| 11 | 34 | 0.02. |

List of abbreviation
- OAF.: Organocatalytic aqueous formulation
- TMP: Thermo-mechanical pulp
- BCTMP: Bleached chemi-thermomechanical pulp
- CTMP: Chemi-Thermomechanical pulp
- HDTMS.: Hexadecyltrimethoxysilane
- MMw.: Medium molecular weight
- SDS: sodium dodecyl sulfate
- SLSA: Sodium Lauryl Sulfoacetate
- MCC: microcrystalline cellulose
- CNF: cellulose nanofibers
- CNC: cellulose nanocrystals

## Claims

1. A material suitable for manufacturing hydrophobic cellulose-based light- weight products, such as foams and foam papers, comprising
any type of cellulose pulp from either soft wood or hardwood,
2 to 10 wt.% of hydrophobic suspension (OAF) to pulp,
0.5 to 5wt% of Chitosan solution in organic acids to pulp, 3 to 10 wt.% of surfactants to the pulp.

2. The material according to claim 1, comprising
any type of cellulose pulp from soft wood or hardwood,
2 to 10 wt.% of hydrophobic suspension (OAF1) to pulp,
0.5 to 5wt% of Chitosan solution in organic acids selected from the group comprising acetic acid, citric acid, oxalic acid, and lactic acid to the pulp.
3 to 10 wt.% of surfactants selected from the group comprising or consisting of sodiumdodecyl sulfate (SDS), and sodiumlaurylsulfoacetate (SLSA).

3. The material to claim 1, comprising
any type of cellulose pulpfrom soft wood or hardwood,
2 to 10 wt.% of hydrophobic suspension (OAF2) to pulp,
3to 10 wt.% of surfactants selected from the group comprising sodiumdodecyl sulfate (SDS), and sodiumlaurylsulfoacetate (SLSA).

4. A material suitable for manufacturing hydrophobic cellulose foam with additional function, comprising
any type of cellulose pulp from soft wood or hardwood,
2 to 10 wt.% of hydrophobic suspension either OAF1 or OAF2 to pulp,
0.5 to 5wt% of Chitosan solution in organic acids selected from the group comprising acetic acid, citric acid, oxalic acid, and lactic acid to the pulp,
3 to 10 wt.% of surfactants selected from the group comprising sodiumdodecyl sulfate (SDS), and sodiumlaurylsulfoacetate (SLSA),
0.5 to 6 wt% of an inorganic component selected from the group comprising silica dioxide gel, hydrophilic pyrogenic silica, hydrophobic pyrogenic silica, nonographite, montmorillonite, titanium dioxide and sodium silicate.

5. A material suitable for manufacturing hydrophobic cellulose foam with additional function, comprising
any type of cellulose pulp from soft wood or hardwood,
2 to 10 wt.% of hydrophobic suspension either OAF1 or OAF2 to pulp,
0.5 to 5wt% of Chitosan solution in organic acids selected from the group comprising acetic acid, citric acid, oxalic acid, and lactic acid to the pulp,
3 to 10 wt.% of surfactants selected from the group comprising sodiumdodecyl sulfate (SDS), and sodiumlaurylsulfoacetate (SLSA),
0.5 to 6wt.% of a lignin selected from sulphonated, kraft and dissolved lignin.

6. A material suitable for manufacturing hydrophobic cellulose foam with additional function, comprising
any type of cellulose pulp from soft wood or hardwood.
2 to 10 wt.% of hydrophobic suspension either OAF1 or OAF2 to pulp,
0.5 to 5wt% of Chitosan solution in organic acids selected from the group comprising acetic acid, citric acid, oxalic acid, and lactic acid to the pulp,
3 to 10 wt.% of surfactants selected from the group comprising sodiumdodecyl sulfate (SDS), and sodiumlaurylsulfoacetate (SLSA),
0.5 to 6wt.% of a nanocellulose selected from the group of MCC, CNF and CNC.

7. The material according to any one of claims 1 to 6, wherein the pulp is selected from the group comprising TMP, CTMP, sulphit pulp, kraft pulp, and any type of bleached pulp.

8. Use of the materials according to any one of claims 1 to 6, for packaging purposes.

9. Use of the materials according to any one of claims 1 to 6, for oil/water separation, and removing of water contaminants.

10. Use of the materials according to any one of claims 1 to 6, for fire retardancy, insulation, and electroconductivity applications.

11. Use of the materials according to any one of claims 1 to 6, for metal ion removal.

12. Use of the materials according to any one of claims 1 to 6, for removal of a pharmaceutical contaminant.

13. A process for manufacturing OAF2 suspension for use in the material according to claim 1, 3 to 6 comprising the steps of mixing
a) preparing organic acid (0.5-4wt.%) solution,
b) dissolving a polysaccharide (0.5-5wt.%) in organic acid,
c) heating the system until 65-85 °C for 20-30 minutes,
d) optionally centrifuging the solution,
e) adding 0.5 to 5wt.% C₁₀₋₃₀ alkanetriC₁₋₅alkoxysilane to the (d),
f) homogenizing the mixture by ultra torax.

14. A process according to claim 13 comprising the steps of mixing
a) preparing organic acid (0.5-4wt.%) solution from the group comprising acetic acid, citric acid, oxalic acid, and lactic acid,
b) dissolving chitosan low molecular weight to high molecular weight in organic acid (a),
c) heating the system until 65 °C for 20-30 minutes,
d) centrifuge the solution,
e) adding (0.5-5wt.%) C₁₀₋₃₀ alkanetriC₁₋₅alkoxysilane to the (d),
f) homogenizing the mixture by ultra torax.

15. A process according to claim 13 comprising the steps of mixing
a) preparing organic acid (0.1-2wt.%) solution from the group comprising acetic acid, citric acid, oxalic acid, and lactic acid
b) dissolving cationic starch in organic acid solution (a)
c) heating the system until 85 °C for 20-30 minutes
d) adding (0.5-5wt.%) C₁₀₋₃₀ alkanetriC₁₋₅alkoxysilane to the (c)
e) homogenizing the mixture by ultra torax.
additional functionadditional functionadditional function.
